# EUROPEAN PATENT APPLICATION

(11) **EP 1 849 596 A1**
(43) Date of publication of application: **31.10.2007**
(21) Application number: 05792094.4
(22) Date of filing: 26.09.2005
(51) Int. Cl.: B32B 27/00, B29D 7/00, B29D 12/00, B29D 31/00

(54) **A METHOD FOR PRODUCING A COMPOSITE PLASTIC SHEET, THE COMPOSITE PLASTIC SHEET AND THE SEAT BACK OF A CHAIR MADE OF THE COMPOSITE PLASTIC SHEET**

(30) Priority: 30.09.2004 CN 200410035872
(71) Applicant: Leng, Luhao, Xiamen, Fujian 361009 (CN)
(72) Inventor: Leng, Luhao, Xiamen, Fujian 361009 (CN)
(74) Representative: Stuttard, Garry Philip
(86) International application number: PCT/CN2005/001575
(87) International publication number: WO 2006/034642

(57) **Abstract**

A method for producing a composite plastic sheet comprises: (1) producing an upper shell with a desired shape by vacuum processing a plastic sheet directly according to the design, a connection wall extends downwardly from the edge of this upper shell in a direction substantially vertical to the surface of the shell; (2) producing a lower shell with a desired shape by injecting a plastic sheet directly according to the design, a connection wall extends upwardly from the edge of this lower shell in a direction substantially vertical to the surface of the shell. The lower surface of the shell is smooth, while the upper surface of the shell has many reinforcing ribs integrally manufactured, and the top surface, which is composed of these ribs, is coincided with the lower surface of the upper shell; and (3) connecting the lower face of the upper shell and the top surface of the lower shell by a binder or ultrasonic welding; at the same time, connecting the connection walls of the upper shell and the lower shell by a binder, ultrasonic welding, a buckle, or a screw thread. The composite plastic sheet includes an upper shell with a desired shape made by vacuum processing a plastic sheet directly according to the design, a connection wall extends downwardly from the edge of this upper shell in a direction substantially vertical to the surface of the shell; and a lower shell with a desired shape made by injecting a plastic sheet directly according to the design, a connection wall extends upwardly from the edge of this lower shell in a direction substantially vertical to the surface of the shell. And the lower surface of the shell is smooth, while the upper surface of the shell has many reinforcing ribs integrally manufactured. The top surface, which is composed of these ribs, is coincided with the lower surface of the upper shell. And the connection walls of the upper shell and the lower shell are jointed together to make a closed composite sheet. The top surface is under the lower surface of the upper shell, and within the composite sheet. The seat back of a chair includes the above composite plastic sheet.

## Description

### TECHNICAL FIELD

The present invention relates to a plastic composite board and its manufacturing method.

### BACKGROUND OF ARTS

Due to the lack of the wood materials and the improvement of the capability of plastic board, the plastic board is used more and more widely. The Chinese patent application number 96120421.4 discloses a plastic hollow plate for postal packing chest and its production technology; the plastic hollow plate is made up of polyethylene or polypropylene and pigment through extruding-out, and has an internal hollow structure with vertical reinforcing ribs at intervals, and has equidistant vertical reinforcement pieces in the vertical direction with the plane. Its advantages include no poison and odour, high strength and shock and corrosion resistances, light, weight, and long service life. But the plastic hollow plate is only fit to plane plate, such as box body; the plastic hollow plate can not be used as special shape, such as backrest of chair or seat board and so on.

It has another board of blow molding or board of vacuum forming technology, which also can be made as hollow board with some reinforcement pieces on its lower faceplate for improving its bearing power; the lower faceplate of the board is scraggy, so the board can not be used as double sided board, such as backrest of chair.

### DESCRIPTION

The purpose of the present invention is to overcome the disadvantages of the known technology, and to supply a plastic composite board and its manufacturing method; the plastic composite board can be made to board of curved surface with any shape, and has a light weight, a high strength, low manufacturing cost, and can be used as double sided board.

The manufacturing method of the plastic composite board of the present invention adopts technique proposal as follows: the manufacturing method of a plastic composite board, comprising
A, plastic board of required shape is directly made by vacuum forming technology as the upper cover board, whose edge extends downwards to form a suberect connective wall;
B, plastic board of required shape is directly made by injection moulding as the nether soleplate with some reinforcement pieces; the undersurface of the nether soleplate is glaze; the upper surface of the nether soleplate is molded with some integrative reinforcement pieces; the top surface constituted by some reinforcement pieces is matched with the bottom surface of the upper cover board; the edge of the nether soleplate extends upwards to form a suberect connective wall;
C, the top surface of reinforcement pieces is fixed to the bottom surface of the upper cover board by gluewater or ultrasonic jointing; at the same time, the connective wall of the upper cover board is fixed to the connective wall of the nether soleplate by gluewater or welding or buckling joint or screw thread.

A plastic composite board of the present invention, comprises a composite upper cover board and a composite nether soleplate; the upper cover board is board of curved surface or surface board, which is made by direct vacuum forming technology according to the desired shape of the plastic composite board; the edge of the upper cover board extends downwards to form a suberect connective wall;

The nether soleplate is directly made by injection moulding according to the desired shape of the plastic composite board. The undersurface of the nether soleplate is glaze; the upper surface of the nether soleplate is molded with some reinforcement pieces. The top surface constituted by reinforcement pieces is matched with the bottom surface of the upper cover board. The edge of the nether soleplate extends upwards to form a suberect connective wall.

The connective wall of the upper cover board is fixed to the connective wall of the nether soleplate to form a closed composite board; the top surface of every reinforcement pieces is located under the bottom surface of the upper cover board and every reinforcement pieces areis located inside of the composite board.

The undersurface of said nether soleplate is plane or curved surface.

Said upper cover board buckles on the nether soleplate; the connective wall of the upper cover board is fixed to the connective wall of the nether soleplate by gluewater, welding, buckling joint or screw thread.

The upper surface of said every reinforcement pieces is fixed to the bottom surface of the upper cover board by gluewater or ultrasonic jointing.

The upper surface of said upper cover board is composite with film layer; the film layer is design of grain of wood or marble or other natural objects.

The bottom of the outside of the connective wall of said nether soleplate has an orientation protruding part; the width of the protruding part 15 is equal to the thickness of the connective wall of the upper cover board.

The bottom of the outside of the connective wall of said nether soleplate extends outside to form an orientation slot; the width of the orientation slot is equal to the thickness of the connective wall of the upper cover board.

There are some holes on the superposition side of the upper cover board and the nether soleplate, and matched with some self-tapping screws; the upper cover board is fixed to the nether soleplate by self-tapping screws locked into the holes.

There are some holes or grooves on the superposition side of the upper cover board and the nether soleplate, and matched with some elasticity hooks with sidesteps; the upper cover board is fixed to the nether soleplate by inserting the elasticity hooks into the holes or grooves through outside force.

Said upper cover board is fixed to the nether soleplate by bolt and matched threaded hole, or by bolt and matched inner nut.

According to the description of the manufacturing method of the plastic composite board of the present invention, comparing with the background arts, the present invention has virtues as follows:

The manufacturing method of the plastic composite board of the present invention, plastic board of required shape is directly made by vacuum forming technology as the upper cover board; plastic board of required shape is directly made by injection moulding as the nether soleplate with some reinforcement pieces, the top surface constituted by some reinforcement pieces is matched with the bottom surface of the upper cover board; as the upper cover board and the nether soleplate of the present invention separately adopts vacuum forming technology and injection moulding, which to make the plastic composite board have the virtue of light weight of board of vacuum forming technology, and have the virtue of high strength of board of injection moulding; and that, the upper surface of the upper cover board can be composite with film layer, the undersurface of the nether soleplate can be slick plane or slick curved surface; so the plastic composite board can directly replace curved wood board or solid wood board (such as replacing curved wood board and solid wood board as the backrest and seat board of chair), and it has lighter weigh than the curved wood board or solid wood board, has a higher strength than the curved wood board or the solid wood board, has a more beautiful appearance than the curved wood board or the solid wood board.

According to the description of the plastic composite board of the present invention, comparing with the background arts, the present invention has virtues as follows:

Firstly, the upper cover board of the plastic composite board of the present invention is made by direct vacuum forming technology according to desired shape of the upper surface of the plastic composite board, which is machined easily, has a high precision of machining, has a light weight and a high strength and a low manufacturing cost; the nether soleplate is made by direct injection moulding according to the desired shape of the plastic composite board, which is machined easily, has a high precision of machining, has a high strength and a low manufacturing cost.

Secondly, the top surface constituted by reinforcement pieces is matched with the bottom surface of the upper cover board, and the undersurface of the upper cover board leans against the upper surface of every reinforcement pieces, and every reinforcement pieces support the upper cover board; every reinforcement pieces increase the strength of the undersurface, and increase the strength of the nether soleplate, and increase the strength of the plastic composite board.

Thirdly, the upper cover board buckles on the undersurface of the nether soleplate; the upper cover board is fixed to the nether soleplate by gluewater, welding, buckling joint or screw thread, which has a convenient connection and has a high connection intensity.

Fourthly, the upper surface of every reinforcement pieces is fixed to the bottom surface of the upper cover board by gluewater or ultrasonic jointing, which has a high connection intensity and is machined expediently, and increase the matched intensity of the upper cover board and the nether soleplate, and increase the intensity of the whole plastic composite board.

Fifthly, there are some holes on the superposition side of the upper cover board and the nether soleplate, and matched with some self-tapping screws; the upper cover board is fixed to the nether soleplate by self-tapping screws locked into the holes, which has a convenient connection and has a low manufacturing cost.

Sixthly, the upper cover board is fixed to the nether soleplate by inserting the elasticity hooks into the holes or grooves through outside force, which has a convenient connection and a high connection intensity and is knock-down.

Seventhly, the upper cover board is fixed to the nether soleplate by bolt and matched threaded hole, or by bolt and matched inner nut, which has a highhigh connection intensity and is knock-down.

### BRIEF DESCRIPTION OF ATTACHED DRAWINGS

Figure 1 is the cutaway view of the plastic composite board adopting the first connection mode of the present invention.;
Figure 2 is the disassembled cutaway view of the plastic composite board adopting the first connection mode of the present invention in figure 1.;
Figure 3 is the cutaway view of the plastic composite board adopting the second connection mode of the present invention.;
Figure 4 is the disassembled cutaway view of the plastic composite board adopting the second connection mode of the present invention in figure 3.;
Figure 5 is the cutaway view of the plastic composite board adopting the third connection mode of the present invention.;
Figure 6 is the disassembled cutaway view of the plastic composite board adopting the third connection mode of the present invention in figure 5.;
Figure 7 is the cutaway view of the plastic composite board adopting the fourth connection mode of the present invention.;
Figure 8 is the disassembled cutaway view of the plastic composite board adopting the fourth connection mode of the present invention in figure 7.;
Figure 9 is the cutaway view of the plastic composite board adopting the fifth connection mode of the present invention.;
Figure 10 is the disassembled cutaway view of the plastic composite board adopting the fifth connection mode of the present invention in figure 9.;
Figure 11 is the cutaway view of the plastic composite board adopting the sixth connection mode of the present invention.;
Figure 12 is the disassembled cutaway view of the plastic composite board adopting the sixth connection mode of the present invention in figure 11.;
Figure 13 is the cutaway view of the plastic composite board adopting the seventh connection mode of the present invention.;
Figure 14 is the disassembled cutaway view of the plastic composite board adopting the seventh connection mode of the present invention in figure 13.;
Figure 15 is the cutaway view of the plastic composite board adopting the eighth connection mode of the present invention.;
Figure 16 is the disassembled cutaway view of the plastic composite board adopting the eighth connection mode of the present invention in figure 15.;
Figure 17 is the cutaway view of the upper cover board printed with printing layer.;
Figure 18 is the three-dimensional sketch map of the chair in embodiment 1.;
Figure 19 is cutaway view of the chair in embodiment 1.;
Figure 20 is cutaway view of the chair in embodiment 2.;

### EMBODIMENTS

Referring to attached drawings, we will explain the present invention as follows.

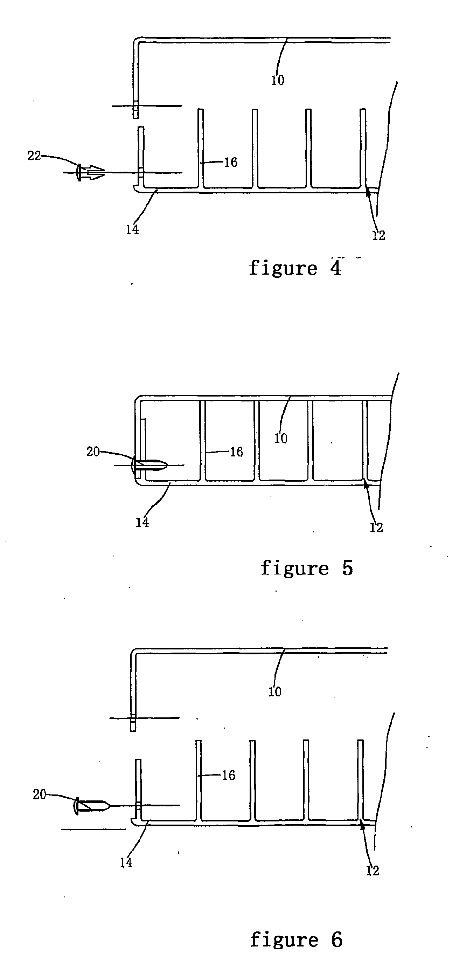

Manufacturing method of a plastic composite board, as shown in figures 1 and 2, having steps as follows:
A, plastic board of required shape is directly made by vacuum forming technology as the upper cover board 10, whose edge extends downwards to form a suberect connective wall 11;
B, plastic board of required shape is directly made by injection moulding as the nether soleplate 12 with some reinforcement pieces 16; the undersurface 14 of the nether soleplate 12 is glaze; the upper surface of the nether soleplate 12 is molded with some integrative reinforcement pieces 16; the top surface constituted by some reinforcement pieces 16 is matched with the bottom surface of the upper cover board 10; the edge of the nether soleplate 12 extends upwards to form a suberect connective wall 13;
C, the top surface of reinforcement pieces 16 is fixed to the bottom surface of the upper cover board 10 by gluewater or ultrasonic jointing; at the same time, the connective wall 11 of the upper cover board 10 is fixed to the connective wall 13 of the nether soleplate 12 by gluewater or welding or buckling joint or screw thread.

A plastic composite board, as shown in figure 2, comprising the composite upper cover board 10 and the composite nether soleplate 12. The upper cover board 10 is board of curved surface or surface board, which is made by direct vacuum forming technology according to the desired shape of the plastic composite board; the nether soleplate 12 is directly made by injection moulding according to the desired shape of the plastic composite board. The undersurface 14 of the nether soleplate 12 is glaze; the upper surface of the nether soleplate 12 is molded with some integrative reinforcement pieces 16. The top surface constituted by reinforcement pieces 16 is matched with the bottom surface of the upper cover board 10. The top surface of every reinforcement pieces 16 is located under the bottom surface of the upper cover board 10; every reinforcement pieces 16 are located between the upper cover board 10 and the nether soleplate 12, namely the upper cover board 10 is fixed to the nether soleplate 12 to form a close composite board.

Some reinforcement pieces 16 are located on the upper surface of the nether soleplate 12 regularly; the number of reinforcement pieces 16 is designed by the area and the height of the plastic composite board and the intensity demand of the design.

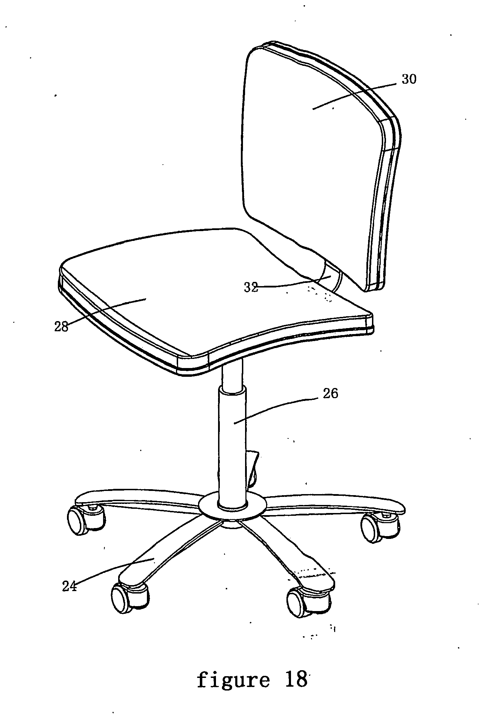

As shown in figure 17, both the upper surface of the upper cover board 10 and the undersurface 14 of the soleplate 12 are printed with printing layer 18; the printing layer 18 is design of grain of wood or marble or other natural objects. The upper cover board 10 is single-layer plastic board or multi-layer plastic board made by vacuum forming technology; the height of the plastic board varied from 0.3 to 4 mm. The plastic composite board has a beautiful appearance and a thin thickness. The materials of the upper cover board 10 are all PP, PE, ABS or other engineering plastics.

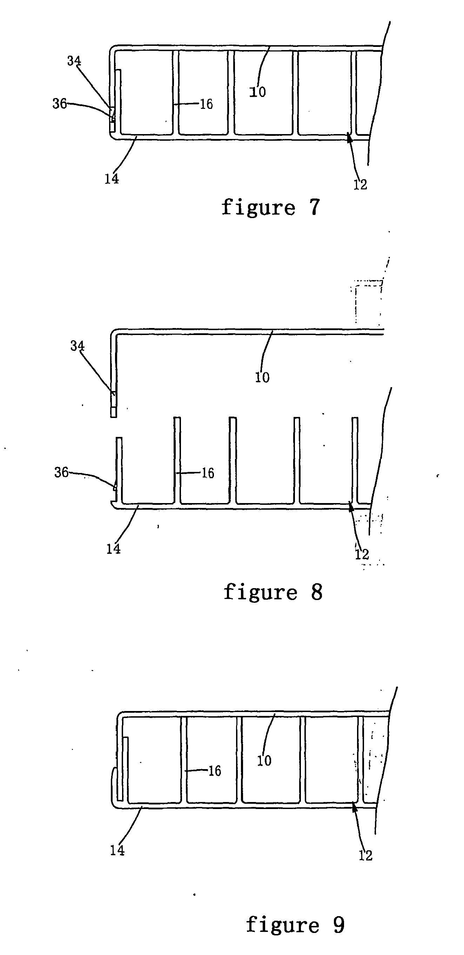

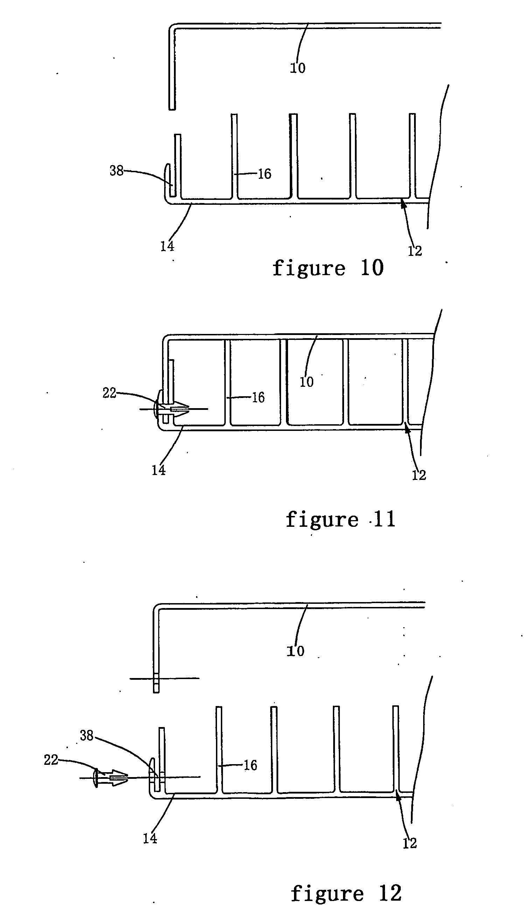

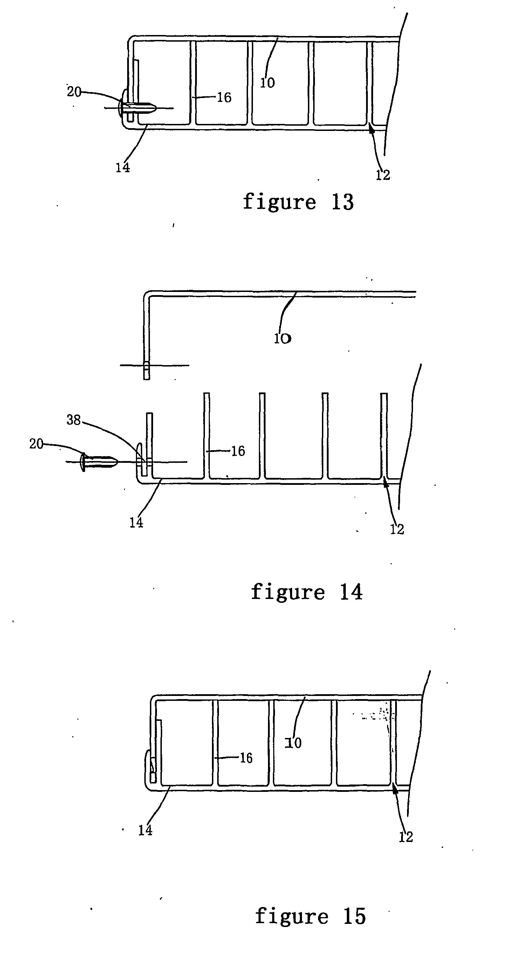

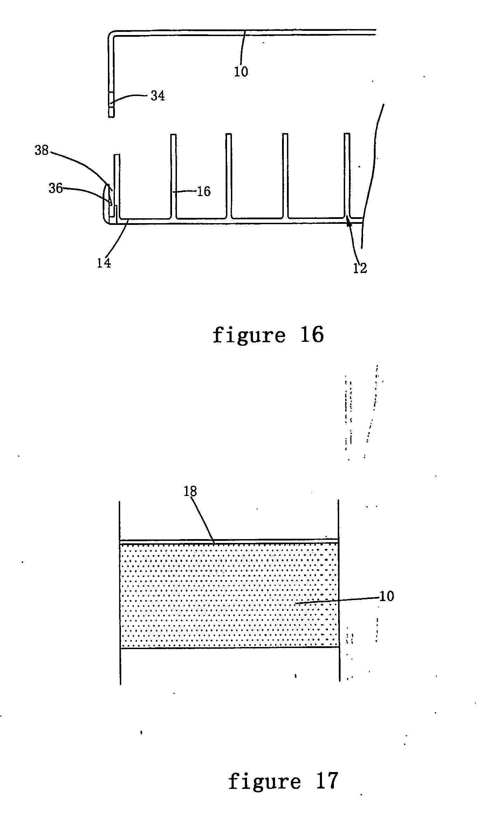

The upper cover board 10 of the present invention is fixed to the nether soleplate 12 by modes as follows:
1, buckling and bonding with gluewater: as shown in figures 1 and 2, the bottom of the outside of the connective wall 13 of the nether soleplate 12 has an orientation protruding part 15; the width of the protruding part 15 is equal to the thickness of the connective wall 11 of the upper cover board 10. The upper cover board 10 buckles on the nether soleplate 12; the nether head face of the connective wall 11 of the upper cover board 10 leans against the protruding part 15; the connective wall 11 of the upper cover board 10 is fixed to the connective wall 13 of the nether soleplate 11 by gluewater.
2, buckling and hook connection: as shown in figures 3 and 4, the bottom of the outside of the connective wall 13 of the nether soleplate 12 has an orientation protruding part 15; the width of the protruding part 15 is equal to the thickness of the connective wall 11 of the upper cover board 10. There is orientation hole on the superposition side of the connective wall 11 of the upper cover board 10 fixed to the connective wall 13 of the nether soleplate 11, and there are some elasticity hooks 22 with sidestep. The upper cover board 10 buckles on the nether soleplate 12; the nether head face of the connective wall 11 of the upper cover board 10 leans against the protruding part 15; the elasticity hook 22 is inserted into the orientation protruding part to fix by outside force.
3, buckling and screw connection: as shown in figures 5 and 6, has difference with buckling and hook connection: the upper cover board 10 buckles on the nether soleplate 12; the nether head face of the connective wall 11 of the upper cover board 10 leans against the protruding part 15; it is fixed by self-tapping screw 20 locked into the orientation hole.
4, buckling and clamping connection: as shown in figures 7 and 8, the bottom of the outside of the connective wall 13 of the nether soleplate 12 has an orientation protruding part 15; the width of the protruding part 15 is equal to the thickness of the connective wall 11 of the upper cover board 10. There is clamping hole 34 on the connective wall 11 of the upper cover board 10,10; accordingly there is clamping piece 36 on the connective wall 13 of the nether soleplate 12. The clamping piece 36 is taper with a smaller upside and a bigger downside; the upper cover board 10 is fixed to the nether soleplate 12 by clamp connection of the clamping piece 34 and the clamping hole 36.
5, plug and bonding with gluewater: as shown in figures 9 and 10, the bottom of the outside of the connective wall 13 of the nether soleplate 12 extends outside to form an orientation slot 38. The width of the orientation slot 38 is equal to the thickness of the connective wall 11 of the upper cover board 10. The nether head face of the connective wall 11 of the upper cover board 10 plugs into the orientation slot 38; the connective wall 11 of the upper cover board 10 is fixed to the connective wall 13 of the nether soleplate 12 by gluewater.
6, plug and hook connection: as shown in figures 11 and 12, the bottom of the outside of the connective wall 13 of the nether soleplate 12 extends outside to form an orientation slot 38. The width of the orientation slot 38 is equal to the thickness of the connective wall 11 of the upper cover board 10. There is orientation hole on the superposition side of the connective wall 11 of the upper cover board 10 fixed to the connective wall 13 of the nether soleplate 11, and there are some elasticity hooks 22 with sidestep. The nether head face of the connective wall 11 of the upper cover board 10 plugs into the orientation slot 38; the elasticity hook 22 is inserted into the orientation protruding part to fix by outside force, to make the upper cover board 10 having knock-down connection with the nether soleplate 12.
7, plug and screw connection: as shown in figures 13 and 14, has difference with the buckling and hook connection: the nether head face of the connective wall 11 of the upper cover board 10 plugs into the orientation slot 38, and the connective wall 11 of the upper cover board 10 is locked by self-tapping screw 20, to make the upper cover board 10 having knock-down connection with the nether soleplate 12.
8, plug and clamping connection: as shown in figures 15 and 16, the bottom of the outside of the connective wall 13 of the nether soleplate 12 extends outside to form an orientation slot 38. The width of the orientation slot 38 is equal to the thickness of the connective wall 11 of the upper cover board 10. There is clamping hole 34 on the connective wall 11 of the upper cover board 10, accordingly there is clamping piece 36 on the connective wall 13 of the nether soleplate 12. The clamping piece 36 is taper with a smaller upside and a bigger downside; the upper cover board 10 is fixed to the nether soleplate 12 by clamp connection of the clamping piece 34 and the clamping hole 36.

The top surface of reinforcement pieces 16 is fixed to the bottom surface of the upper cover board 10 by gluewater or ultrasonic jointing. The upper surface constituted of every reinforcement pieces 16 fits into the bottom surface of the upper cover board; the upper cover board 10 is fixed to the nether soleplate 12 to form a close composite board; every reinforcement pieces 16 locate in the composite board. The top surfaces of every reinforcement pieces 16 fits into the corresponding parts of the bottom surface of the upper cover board 10.

We will describe the present invention with embodiments as follows.

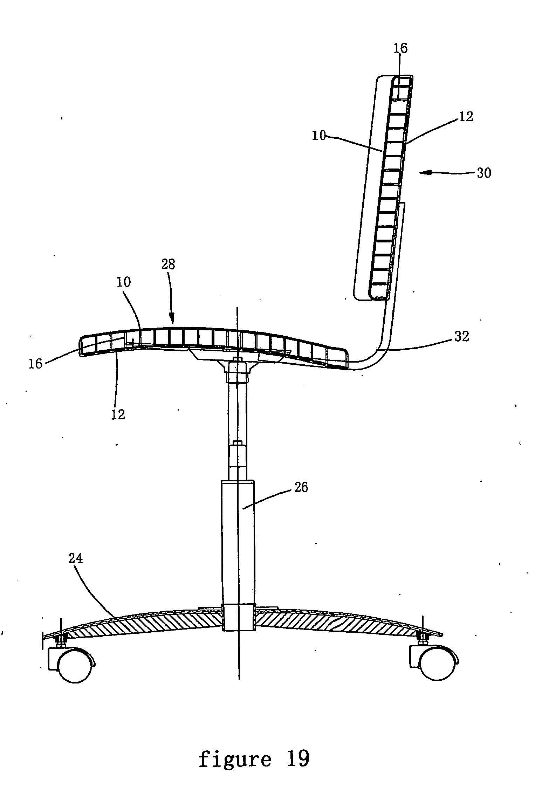

Embodiment 1, a swivel chair, as shown in figures 18 and 19, comprising a base 24, a leg brace 26, a seat board 28, a backrest 30 and a connective pole 32.

The base 24 comprises a pedestal and five feet bars which is fixed to the pedestal equably; feet bars have universal idler wheels, so the base 24 can move.

The leg brace 26 is fixed to the center of the pedestal; the leg brace 26 comprises a sleeve, a touring bar which has bell and spigot joint with the sleeve, a lifter set locating between the sleeve and the touring bar, a governor lever for accommodating the lifter set. It can accommodate the height of the leg brace 26 by accommodating the lift and fall of the touring bar.

Early seat board 28 and backrest 30 are made by curvedbent wood board or solid wood board, which has a big weight and wastes wood materials. The seat board 28 and the backrest 30 of the present invention adopt the above plastic composite board, which has a light weight, a good strength, an appropriate curved surface of outer surface, and can be printed with grain of wood or marbling according to the require of people.

The seat board 28 is board of curved surface with convex upper part, comprises the upper cover board 10 of curved surface with convex upper part made by vacuum forming technology; the circumambience of the upper cover board 10 extends downwards to form a suberect connective wall 11; a nether soleplate 12 made by injection moulding. The undersurface 14 of the nether soleplate 12 is glaze; the upper surface of the nether soleplate 12 is molded with some integrative reinforcement pieces 16. The top surface constituted by reinforcement pieces 16 is matched with the bottom surface of the upper cover board 10. The circumambience of the nether soleplate 12 extends upwards to form a suberect connective wall 13. The upper cover board 10 buckles on the nether soleplate 12; every reinforcement pieces 16 are locate between the upper cover board 10 and the nether soleplate 12. The top surface of reinforcement pieces 16 is fixed to the bottom surface of the upper cover board 10 by gluewater. The connective wall 11 of the upper cover board 10 is fixed to the connective wall 13 of the nether soleplate 12 by gluewater to form a closed composite board, namely the seat board 28.

The undersurface of the seat board 28 has a first connective part; the seat board 28 is fixed to the leg brace 26 by the first connective part; the undersurface of the nether soleplate 12 of the seat board 28 is molded with integrative installing surface for the first connective part.

The backrest 30 has same structure with the seat board 28; the backrest 30 is composite board of curved surface with concave inner part; the back surface of the backrest has a second connective part fixedly.

The connective 32 is L-shaped; one end of the connective 32 is fixed to the first connective part; the other end of the connective 32 is fixed to the second connective part.

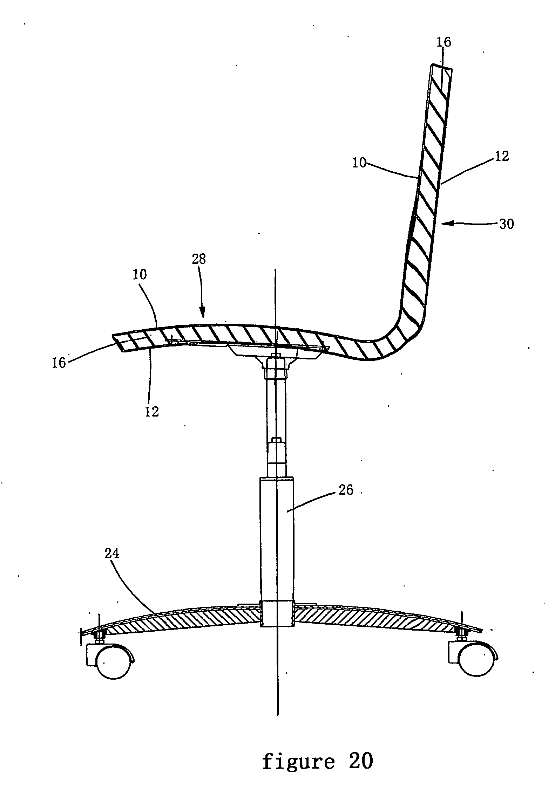

Embodiment 2, a plastic composite chair, as shown in figure 20, comprises a base 24, a leg brace 26, a seat board 28 and a backrest 30.

The base 24 comprises a pedestal and five feet bars which is fixed to the pedestal equably; feet bars have universal idler wheels, so the base 24 can move.

The leg brace 26 is fixed to the center of the pedestal; the leg brace 26 comprises a sleeve, a touring bar which has bell and spigot joint with the sleeve, a lifter set locating between the sleeve and the touring bar, a governor lever for accommodating the lifter set. It can accommodate the height of the leg brace 26 by accommodating the lift and fall of the touring bar.

The seat board 28 and the backrest 30 are L-shaped integrative plastic composite board; the upper cover board 10 of the seat board 28 and the backrest 30 is L-shaped board of vacuum forming technology; the nether soleplate 12 is board of injection molding having matched shape with the upper cover board 10. The upper surface of the nether soleplate 12 is molded with some integrative reinforcement pieces 16 equably. The top surface constituted of the reinforcement pieces 16 has same shape with the undersurface of the upper cover board 10. The edge of the upper cover board 10 extends downwards to form a connective wall 11; the edge of the nether soleplate 12 extends upwards to form a connective wall 13. The upper cover board 10 buckles on the nether soleplate 12. Every reinforcement pieces 16 are locate between the upper cover board 10 and the nether soleplate 12. The top surface of reinforcement pieces 16 is fixed to the bottom surface of the upper cover board 10 by gluewater. The connective wall 11 of the upper cover board 10 is fixed to the connective wall 13 of the nether soleplate 12 by gluewater to form a closed composite board, namely the seat board 28.

While the present invention has been described in connection with what is considered the most practical and preferred embodiment, it is understood that present invention is not limited to the disclosed embodiment but is intended to cover various arrangements included within the spirit and scope of the broadest interpretation so as to encompass all such modifications and equivalent arrangements.

### INDUSTRY PRACTICABILITY

The plastic composite board of the present invention is constituted of an upper cover board made by vacuum forming technology and a nether soleplate made by injection molding with some reinforcement pieces, can be industrialized, has a good industry practicability.

## Claims

1. A manufacturing method of a plastic composite board having steps as follows:
A, plastic board of required shape is directly made by vacuum forming technology as the upper cover board, whose edge extends downwards to form a suberect connective wall;
B, plastic board of required shape is directly made by injection moulding as the nether soleplate with some reinforcement pieces; the undersurface of the nether soleplate is glaze; the upper surface of the nether soleplate is molded with some integrative reinforcement pieces; the top surface constituted by some reinforcement pieces is matched with the bottom surface of the upper cover board; the edge of the nether soleplate extends upwards to form a suberect connective wall;
C, the top surface of reinforcement pieces is fixed to the bottom surface of the upper cover board by gluewater or ultrasonic jointing; at the same time, the connective wall of the upper cover board is fixed to the connective wall of the nether soleplate by gluewater or welding or buckling joint or screw thread.

2. A plastic composite board, has characters as follows: it comprises a composite upper cover board and a composite nether soleplate;
the upper cover board is board of curved surface or surface board, which is made by direct vacuum forming technology according to the desired shape of the plastic composite board; the edge of the upper cover board extends downwards to form a suberect connective wall;
the nether soleplate is directly made by injection moulding according to the desired shape of the plastic composite board. The undersurface of the nether soleplate is glaze; the upper surface of the nether soleplate is molded with some reinforcement piece. The top surface constituted by reinforcement pieces is matched with the bottom surface of the upper cover board. The edge of the nether soleplate extends upwards to form a suberect connective wall;.
the connective wall of the upper cover board is fixed to the connective wall of the nether soleplate to form a closed composite board; the top surface of every reinforcement pieces is located under the bottom surface of the upper cover board and is located inside of the composite board.

3. A plastic composite board according to claim 2, has characters as follows: the undersurface of said nether soleplate is plane or curved surface.

4. A plastic composite board according to claims 2 or 3, has characters as follows: said upper cover board buckles on the nether soleplate; the connective wall of the upper cover board is fixed to the connective wall of the nether soleplate by gluewater, welding, buckling joint or screw thread.

5. A plastic composite board according to claims 2, has characters as follows: the upper surface of said every reinforcement pieces is fixed to the bottom surface of the upper cover board by gluewater or ultrasonic jointing.

6. A plastic composite board according to claim 2, has characters as follows: the upper surface of said upper cover board is composite with film layer; the film layer is design of grain of wood or marble or other natural objects.

7. A plastic composite board according to claim 4, has characters as follows: the bottom of the outside of the connective wall of said nether soleplate has an orientation protruding part; the width of the protruding part 15 is equal to the thickness of the connective wall of the upper cover board.

8. A plastic composite board according to claim 4, has characters as follows: the bottom of the outside of the connective wall of said nether soleplate extends outside to form an orientation slot; the width of the orientation slot is equal to the thickness of the connective wall of the upper cover board.

9. A plastic composite board according to claims 7 or 8, has characters as follows: there are some holes on the superposition side of the upper cover board and the nether soleplate, and matched with some self-tapping screws; the upper cover board is fixed to the nether soleplate by self-tapping screws locked into the holes.

10. A plastic composite board according to claims 7 or 8, has characters as follows: there are some holes or grooves on the superposition side of the upper cover board and the nether soleplate, and matched with some elasticity hooks with sidesteps; the upper cover board is fixed to the nether soleplate by inserting the elasticity hooks into the holes or grooves through outside force.

11. A plastic composite board according to claims 7 or 8, has characters as follows: said upper cover board is fixed to the nether soleplate by bolt and matched threaded hole, or by bolt and matched inner nut.

12. A plastic composite backrest board of chair, has characters as follows: it comprises a composite upper cover board and a composite nether soleplate; the upper cover board is board of curved surface according with body curve made by direct vacuum forming technology; the nether soleplate is board of curved surface with reinforcement pieces made by direct injection moulding; the undersurface of the nether soleplate is glaze; the top surface constituted by some reinforcement pieces is matched with the bottom surface of the upper cover board; the top surface of the every reinforcement pieces is located under the bottom surface of the upper cover board.

13. A plastic composite backrest board of chair according to claim 12, has characters as follows: the edge of said upper cover board extends downwards to form a suberect connective wall, correspondingly the edge of the nether soleplate extends upwards to form a suberect connective wall; the connective wall of the upper cover board is fixed to the connective wall of the nether soleplate to form a closed backrest board; every reinforcement pieces is located inside of the backrest board.

14. A plastic composite backrest board of chair according to claims 12 or 13, has characters as follows: said upper cover board buckles on the nether soleplate; the connective wall of the upper cover board is fixed to the connective wall of the nether soleplate by gluewater, welding, buckling joint or screw thread.

15. A plastic composite backrest board of chair according to claims 12 or 13, has characters as follows: the upper surface of said every reinforcement pieces is fixed to the bottom surface of the upper cover board by gluewater or ultrasonic jointing.
